# EUROPÄISCHE PATENTSCHRIFT

(11) **EP 1 053 478 B1**
(45) Veröffentlichungstag und Bekanntmachung des Hinweises auf die Patenterteilung: **07.05.2003**
(21) Anmeldenummer: 99906029.6
(22) Anmeldetag: 07.01.1999
(51) Int. Cl.: G01P 1/02, G01P 1/00

(54) **KAPPE ZUM EINSCHNAPPEN IN EINE AUSNEHMUNG**
CAP FOR SNAPPING ON IN A RECESS
CAPUCHON A ENCLIQUETER DANS UN EVIDEMENT

(30) Priorität: 02.02.1998 DE 19803924
(43) Veröffentlichungstag der Anmeldung: 22.11.2000
(73) Patentinhaber: ROBERT BOSCH GMBH, 70442 Stuttgart (DE)
(72) Erfinder: HERDERICH, Hans-Juergen, D-71394 Kernen (DE)
(86) Internationale Anmeldenummer: DE9900018
(87) Internationale Veröffentlichungsnummer: WO99039213

(56) Entgegenhaltungen:
- DE-U- 9 309 882
- US-A- 5 190 343
- US-A- 5 640 087

## Beschreibung

### Stand der Technik

Die Erfindung betrifft eine Kappe zum Einschnappen in eine Ausnehmung, insbesondere für einen Drehzahlsensor an einem Radiager, nach dem Oberbegriff des Hauptanspruchs. Ein Drehzahlsensor mit Kappe ist z. B. aus der Deutschen Gebrauchsmusterschrift DE 93 09 882 U bekannt.

Es ist bekannt, dass für Anwendungen auf dem Gebiet der Sensortechnik, die Sensoren an festen mechanischen Teilen in der Nähe von sich drehenden oder sonstwie bewegenden Bauelementen angebracht werden müssen. Insbesondere bei Radlagern werden hierzu Kappen in eine Ausnehmung in der Nähe der sich drehenden Achse angebracht. In der Kappe können hierbei magnetische, magnetoresistive oder Hall-Sensoren angebracht werden, die eine Umdrehung detektieren können. Die Befestigung von Kappen aus Kunststoff erfolgt bei bekannten Anordnungen in der Regel durch Einpressen der Kappen in das Metallteil unter Zwischenlage von Dichtungen und eines Metallringes zum Temperaturausgleich, der durch Umbördeln auf die Kappenschulter aufgebracht ist.

### Vorteile der Erfindung

Eine Kappe zum Einschnappen in eine Ausnehmung nach der eingangs beschriebenen Gattung ist in der Weiterbildung mit den erfindungsgemäßen Merkmalen des Kennzeichens des unabhängigen Anspruchs dadurch vorteilhaft, dass eine einfache und sichere Anbringung der Kappe an einem mechanischen Teil mögliche ist.

Auf einfache Weise ist erfindungsgemäß eine Anzahl von Schnapphaken an der Kappe angebracht, die beim Einschnappen in eine Nut der Ausnehmung eingreifen. Diese in der Regel umlaufende Nut kann während der spanenden Bearbeitung des mechanischen Teils, an dem die Kappe angebracht werden soll, innen in die Ausnehmung eingebracht werden.

Um einen sicheren Sitz der Kappe zu gewährleisten, ist es notwendig die Fertigungstoleranzen zwischen der innen umlaufenden Nut, bzw. der gesamten Anlagefläche in der Ausnehmung, und den Schnapphaken, bzw. der gesamten Anlagefläche der Kappe zu kompensieren. Wenn hierbei ein Spalt zwischen der Kappe und der Ausnehmung entsteht, so kann es zu Relativbewegungen zwischen der Kappe und dem mechanischen Teil mit der Ausnehmung kommen, was insbesondere für die beschriebenen Anwendungsfälle sehr störend ist.

Gemäß der Erfindung ist hierzu die Nut an der Flanke in Richtung der Kappe und die korrespondierende Fläche des Schnapphakens in einem Winkel α abgeschrägt. Liegt somit eine Schulter der Kappe am mechanischen Teil an, so rasten die Schnapphaken mehr oder weniger tief in die Nut ein. Je größer hierbei der Winkel α ist, desto größere Toleranzen können kompensiert werden. Ein zu großer Winkel α hat jedoch den Nachteil, dass die Abzugskraft der Kappe eventuell zu klein wird und damit ein sicherer Halt nicht mehr gewährleistet ist.

Um die Abzugskraft möglichst klein zu halten, wird erfindungsgemäß der Winkel α auch möglichst klein gehalten. Um trotzdem größere Toleranzen ausgleichen zu können, sind die Schnapphaken in Einschnapprichtung gemäß einer bevorzugten Ausführungsform unterschiedlich lang ausgebildet. Zum Beispiel können die Schnapphaken jeweils abwechselnd in zwei unterschiedlichen Längen k, ev. 2 mal je 12 in einer Länge auf dem Umfang, ausgebildet sein. Dadurch ist gewährleistet, dass zumindest immer eine Gruppe von Schnapphaken voll in der Nut eingerastet ist.

Bei besonders hoher Temperaturbeanspruchung kann gegebenenfalls die Haltekraft der Schnapphaken durch ein sog. Wegkriechen der Kappe aus Kunststoff unzulässig verringert werden. Um diesen Abbau auszugleichen können die Schnapphaken über eine innen liegende Feder in Richtung der Nuten gedrückt werden. Die Feder ist bei einer kreisförmigen Kappe ein einfacher Federring, der in den Innendurchmesser der Kappe, bzw. der Schnapphaken, gelegt wird.

Bei einer bevorzugten Anwendung der Erfindung ist die Kappe auf ein Radlager, z.B. in einem Kraftfahrzeug, aufsetzbar und im Inneren der Kappe ist ein Drehzahlsensor zur Erfassung der Umdrehung der Achse im Inneren des Radlagers vorhanden.

### Zeichnung

Ein Ausführungsbeispiel der erfindungsgemäßen Kappe zum Einschnappen in eine Ausnehmung eines mechanischen Teils wird anhand der Zeichnung erläutert. Es zeigen:
Figur 1 eine perspektivische Ansicht einer Kappe und
Figur 2 einen Detailschnitt im Bereiche der eingeschnappten Schnapphaken der Kappe nach Figur 1.

### Beschreibung des Ausführungsbeispiels

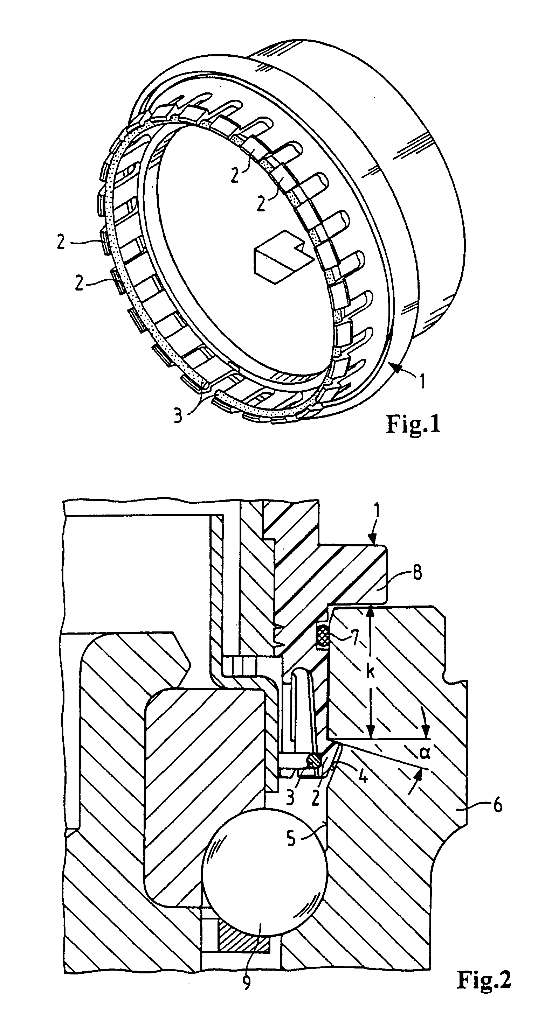

Aus Figur 1 ist eine Kappe 1 aus Kunststoff zum Einschnappen in eine Ausnehmung eines Radlagers gezeigt. Die Kappe 1 weist Schnapphaken 2 auf, mit denen das Einschnappen bewerkstelligt werden kann. In der Kappe 1 kann beispielsweise ein hier nicht erkennbarer Drehzahlsensor für die Erfassung der Drehung einer Achse angebracht sein (vgl. auch Figur 2). Die Schnapphaken 2 nach der Figur 1 weisen eine gleiche Länge k auf, sie können aber auch in einer, in der Beschreibungseinleitung erwähnten Weise, unterschiedlichen Länge k ausgeführt werden. Im Innendurchmesser der Schnapphaken 2 liegt ein Federring 3, der die Schnapphaken 2 nach außen drücken kann.

Eine Schnittdarstellung nach Figur 2 zeigt im Detail den seitlichen Teil der Kappe 1 mit einem Schnapphaken der Länge k, wobei die Kappe 1 mit einer Schulter 8 auf einem Gehäuse 6, gegebenenfalls mit einem geringem Abstand, aufliegt. Der Schnapphaken 2 greift in eine Nut 4 einer Ausnehmung 5 des Gehäuses 6 für ein gelagertes, sich drehendes Teil ein. Die Nut 4 und der Schnapphaken 2 sind an ihren Eingriffsflächen mit einem Winkel α abgeschrägt. In der Ausnehmung 5 befindet sich zwischen der Kappe 1 und dem Gehäuse 6 ein Dichtungsring 7.

## Patentansprüche

1. Kappe zum Einschnappen in eine Ausnehmung, wobei eine Anzahl von Schnapphaken (2) an der Kappe (1) vorhanden sind, die beim Einschnappen in eine Nut (4) der Ausnehmung (5) eingreifen, **dadurch gekennzeichnet, daß** die Schnapphaken (2) in Einschnapprichtung mit einer unterschiedlichen Länge (k) ausgebildet sind, so daß Fertigungstoleranzen bei der Ausbildung der Nut (4) und der Schnapphaken (2) kompensierbar sind.

2. Kappe nach Anspruch 1, **dadurch gekennzeichnet, daß** die Nut (4) an der Flanke in Richtung der Kappe (1) und die korrespondierende Fläche des Schnapphakens (2) in einem Winkel (α) abgeschrägt sind.

3. Kappe nach Anspruch 1 oder 2, **dadurch gekennzeichnet, daß** die Schnapphaken (2) über eine innen liegende Feder (3) in Richtung der Nut (4) drückbar sind.

4. Kappe nach einem der vorhergehenden Ansprüche, **dadurch gekennzeichnet, daß** die Schnapphaken (2) jeweils abwechselnd in zwei unterschiedlichen Längen (k) ausgebildet sind.

5. Kappe nach einem der vorhergehenden Ansprüche, **dadurch gekennzeichnet, daß** die Kappe (1) aus Kunststoff hergestellt ist.

6. Kappe nach einem der vorhergehenden Ansprüche, **dadurch gekennzeichnet, daß** die Kappe (1) auf ein Radlager (5, 6, 7) aufsetzbar ist und im Inneren der Kappe (1) einen Drehzahlsensor zur Erfassung der Umdrehung der Achse im Inneren des Radlagers (5, 6, 7) vorhanden ist.

## Claims

1. Cap for snapping into a recess, a number of snap-in hooks (2) being present on the cap (1), which hooks engage when snapped into a groove (4) of the recess (5), **characterized in that** the snap-in hooks (2) are designed to differ in length (k) in the snap-in direction, with the result that manufacturing tolerances can be compensated for with the design of the groove (4) and of the snap-in hooks (2).

2. Cap according to Claim 1, **characterized in that** the flank of the groove (4) is bevelled in the direction of the cap (1) and the corresponding surface of the snap-in hook (2) is bevelled at an angle (α).

3. Cap according to Claim 1 or 2, **characterized in that** the snap-in hooks (2) can be pressed in the direction of the groove (4) via a spring (3) situated on the inside.

4. Cap according to one of the preceding claims, **characterized in that** the snap-in hooks (2) are of alternating design in each case in two different lengths (k).

5. Cap according to one of the preceding claims, **characterized in that** the cap (1) is produced from plastic.

6. Cap according to one of the preceding claims, **characterized in that** the cap (1) can be placed onto a wheel bearing (5, 6, 7), and in the interior of the cap (1) there is a speed sensor for detecting the rotation of the axis in the interior of the wheel bearing (5, 6, 7).

## Revendications

1. Capuchon destiné à être encliqueté dans une cavité, le capuchon (1) comportant un certain nombre de crochets d'encliquetage (2) qui lors de l'encliquetage viennent prendre dans une rainure (4) de la cavité (5),
**caractérisé en ce que**
les crochets d'encliquetage (2) ont une longueur (k) différente dans la direction d'encliquetage pour compenser les tolérances de fabrication de la rainure (4) et des crochets d'encliquetage (2).

2. Capuchon selon la revendication 1,
**caractérisé en ce que**
le flanc de la rainure (4) en direction du capuchon (1) et la surface correspondante du crochet d'encliquetage (2) sont inclinés suivant un angle (α).

3. Capuchon selon l'une quelconque des revendications 1 ou 2,
**caractérisé en ce que**
les crochets d'encliquetage (2) peuvent être poussés par un ressort intérieur (3) dans la direction de la rainure (4).

4. Capuchon selon l'une quelconque des revendications précédentes,
**caractérisé en ce que**
les crochets d'encliquetage (2) ont alternativement deux longueurs différentes (k).

5. Capuchon selon l'une quelconque des revendications précédentes,
**caractérisé en ce que**
le capuchon (1) est fabriqué en matière plastique.

6. Capuchon selon l'une quelconque des revendications précédentes,
**caractérisé en ce que**
le capuchon (1) est engagé sur un palier de roue (5, 6, 7) et à l'intérieur du capuchon (1) il est prévu un capteur de rotation détectant la rotation de l'axe à l'intérieur du palier de roue (5, 6, 7).
